# EUROPÄISCHE PATENTSCHRIFT

(11) **EP 1 465 358 B1**
(45) Veröffentlichungstag und Bekanntmachung des Hinweises auf die Patenterteilung: **06.08.2008**
(21) Anmeldenummer: 04090092.0
(22) Anmeldetag: 05.03.2004
(51) Int. Cl.: H04B 7/26, B61L 15/00

(54) **Datenübertragungseinrichtung für einen Wagenverbund**
Data communication unit for a set of railway wagons
Dispositif de communication de data pour un rame de transport ferroviaire

(30) Priorität: 04.04.2003 DE 10316743
(43) Veröffentlichungstag der Anmeldung: 06.10.2004
(73) Patentinhaber: SIEMENS AKTIENGESELLSCHAFT, 80333 München (DE)
(72) Erfinder: Jasmer, Ulf, 31226 Peine (DE); Steinberg, Sven, 38100 Braunschweig (DE); Varchmin, Jörn-Uwe, Prof., 38302 Wolfenbüttel (DE)

(56) Entgegenhaltungen:
- EP-A- 0 768 776
- DE-A- 10 316 743
- DE-A1- 10 029 126
- DE-A1- 10 045 810
- US-A- 5 720 455
- US-A1- 2002 027 495

## Beschreibung

Die Erfindung betrifft eine Datenübertragungseinrichtung für einen Wagenverbund gemäß dem Oberbegriff des Anspruchs 1. Derartige Einrichtungen sind aus der US 2002/0027495 A1, der DE 100 29 126 A1 und der DE 100 45 810 A1 bekannt. Dabei werden Funkverbindungen zwischen den Wagen derart projektiert, dass mindestens zwei in Zugrichtung aufeinanderfolgend angeordnete Funkzellen gebildet werden. Ein Verbindungsausfall, insbesondere zwischen zwei Funkzellen kann zu einem Abreißen der Informationsübertragung führen. Die Größe der Funkzellen ist außerdem von der Reichweite der Funkeinrichtungen abhängig. Üblicherweise werden DECT (Digital Enhanced Cordless Telecommunication)-Funkeinrichtungen, deren Reichweite unter 150m liegt, verwendet. Da der Wagenverbund eines Güterzuges bis zu 64 Wagen und somit eine Länge bis zu 1000m aufweisen kann, können bis zu 10 kettenförmig aneinandergereihte Funkzellen erforderlich sein.

Aus der EP 0 768 776 A1 ist ein ringförmiges Kommunikationsnetzwerk mit mehreren Netzwerkknoten bekannt, welcher jeweils von mindestens drei vorangegangenen Knoten Informationen empfangen und diese Informationen an mindestens drei folgende Knoten weiterleiten kann.

Der Erfindung liegt die Aufgabe zugrunde, eine Datenübertragungseinrichtung der gattungsgemäßen Art hinsichtlich Verfügbarkeit, Reichweite und Übertragungsqualität zu verbessern.

Erfindungsgemäß wird die Aufgabe mit den kennzeichnenden Merkmalen des Anspruchs 1 gelöst. Durch die Zusammenschaltung jeweils eines Basismoduls und mehrerer Terminals pro Wagen zu einem Mobilteil ergibt sich die Möglichkeit, ein Kommunikationsnetzwerk mittels Punkt-zu-Punkt-Verbindungen zu realisieren, bei dem zeitgleich mindestens ein redundanter Weg zum Kommunikationspartner existiert. Dadurch wird die Verfügbarkeit erhöht. Die Unterbrechung einer Verbindung führt nicht zum Abreißen der Verkettung. Funkzellen sind entbehrlich. Die Auswahl der Verbindungen erfolgt bedarfsorientiert mittels dynamischer Verbindungssuche anhand bestimmter Parameter, insbesondere Verbindungsqualität oder Feldstärke.

Durch geeignete Topologie kann eine symmetrische Verkettung der Funkeinrichtungen realisiert werden, so dass eine Erweiterung des Wagenverbundes um weitere anzuhängende oder einzufügende Wagen problemlos möglich ist.

Prinzipiell kann die Topologie mittels ausgewählter Verbindungen projektiert werden, wie in den Ansprüchen 2 bis 4 beispielhaft näher beschrieben.

Vorzugsweise ist ein Führungswagen vorgesehen, der üblicherweise der erste Wagen, d. h. die Lok ist, wobei auf diesem Führungswagen ein Bordgerät zur Speicherung wichtiger Betriebsdaten und zur Kommunikation mit externen und/oder internen Einrichtungen vorgesehen ist. Gespeichert sind insbesondere die Wagenadressen und die Wagenreihenfolge, aber auch Programme zur Unterstützung des Netzaufbaus, des Routings sowie zur Fehlerbehandlung. Auf diese Weise ist eine eindeutige Identifikation der Wagen unter Berücksichtigung der Wagenreihung möglich. Da jeder Wagen eindeutig adressierbar ist, lässt sich auch eine transparente Kommunikation von Wagen zu Wagen initialisieren.

Die Erfindung wird nachfolgend anhand figürlicher Darstellungen näher erläutert. Es zeigen:
- Figur 1: Kommunikationsstrukturen nach dem Stand der Technik,
- Figur 2: eine Datenübertragungseinrichtung mit erfindungsgemäßer Hardwareausstattung, wobei ein erster Schritt zum Aufbau redundanter Verbindungen veranschaulicht ist,
- Figur 3: die Datenübertragungseinrichtung gemäß Figur 2 mit vollständiger Topologie,
- Figur 4: eine andere Darstellungsweise des Vernetzungsprinzips nach Figur 3,
- Figur 5: eine zweite Topologie in der Darstellungsweise der Figur 3 und
- Figur 6: eine dritte Topologie in der Darstellungsweise der Figur 3.

In allen Figuren symbolisieren die Pfeile die Richtung des Verbindungsaufbaus im Hinblick auf die Verwendung von DECT-Technologie. Nach dem Aufbau einer Verbindung erfolgt eine bidirektionale Datenübertragung.

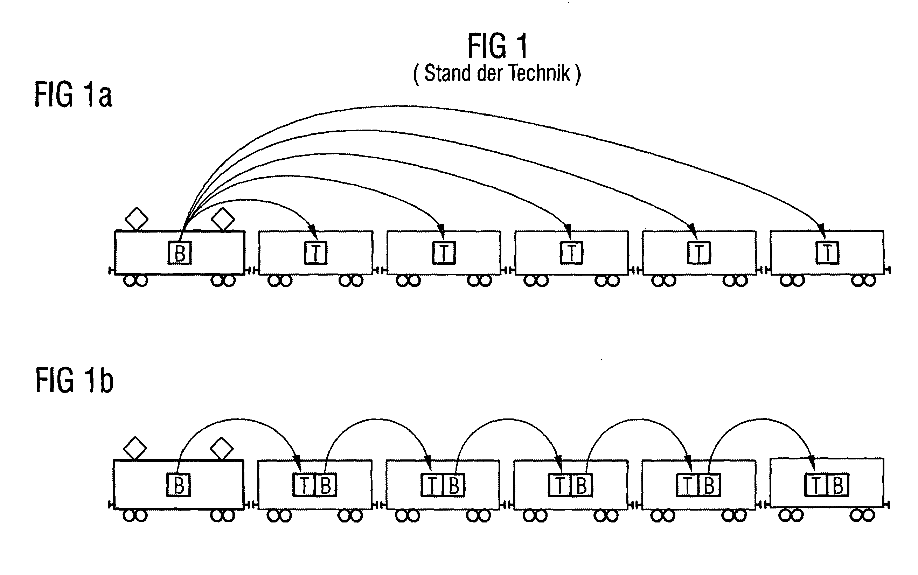

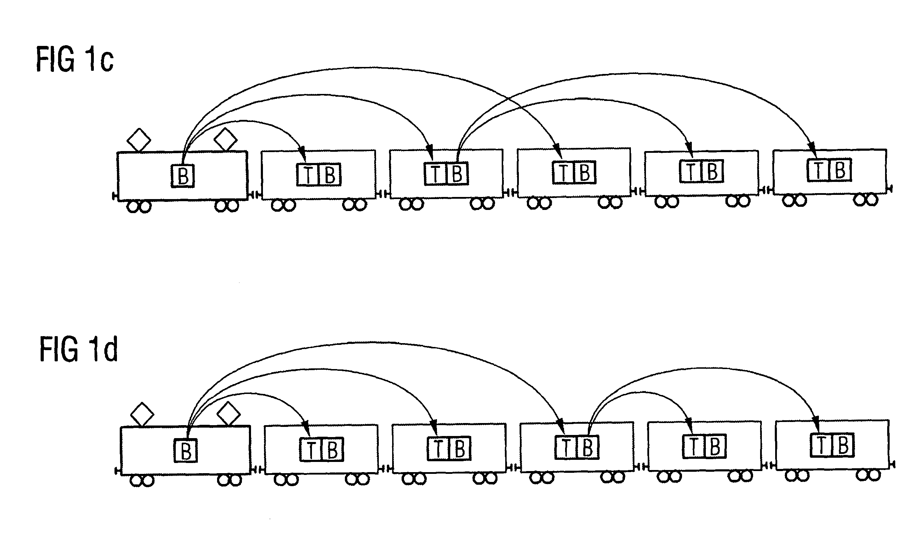

In Figur 1 sind vier Beispiele a bis d bekannter Topologien dargestellt. Im Beispiel a ist lediglich auf der Lok ein Basismodul B vorhanden. Die weiteren Wagen sind jeweils mit einem Terminal T ausgestattet. Da die Wagenliste auf der Lok bekannt ist, können alle Wagen eindeutig adressiert werden. Das Basismodul B kommuniziert beispielsweise im Polling-Verfahren mit allen Wagen, die ein Terminal T aufweisen. Nicht ausgerüstete Wagen werden dabei übersprungen. Eine Vollständigkeitskontrolle kann anhand der sich meldenden Wagen durchgeführt werden. Zur Sicherstellung der Kommunikation über den gesamten Zug hinweg, sind große und teure Richtantennen für eine Reichweite bis zu 1000m unerlässlich. Ein Realisierung ist folglich nur mit hohem technischen Aufwand möglich. Diese Topologie wird auch als Single-Base bezeichnet.

Figur 1b zeigt eine Daisy-Chain-Topologie, bei der die Daten als serielle Kette von einem Wagen zum nächsten weitergeleitet werden. Dazu sind die Lok und alle Wagen mit einem Basismodul B ausgestattet, wobei die Wagen - außer der Lok - zusätzlich ein Terminal - aufweisen. Die Funkeinrichtung auf der Lok fungiert als Master. Auf ihr sind alle Informationen über die mitgeführten Wagen hinterlegt. Nach der Anmeldung des ersten Wagens an dem Basismodul B der Lok übernimmt das Basismodul B des ersten Wagens die Anmeldung des zweiten Wagens usw. Nachdem alle Wagen angemeldet sind, kann der Datenaustausch über die erstellte Kette genutzt werden. Nicht ausgerüstete Wagen können übersprungen werden. Falls die Kette aufgrund eines Fehlers unterbrochen wird, kann die Zugvollständigkeitskontrolle nicht mehr stattfinden, so dass unter Umständen eine schwere Havarie, insbesondere eine Entgleisung oder eine Abtrennung eines oder mehrerer Wagen angenommen werden muss.

Figur 1c charakterisiert einen so genannten Chaos-Link, d. h. eine Verknüpfung des Single-Base-Aufbaus und der Daisy-Chain-Topologie. Der Hardware-Aufbau unterscheidet sich nicht von der Daisy-Chain-Variante gemäß Figur 1b. Der Verbindungsaufbau erfolgt allerdings nach Art von Funkzellen. Dargestellt ist eine Variante, bei der das Basismodul B der Lok die Terminals T der ersten drei Wagen erreichen kann. Die Anmeldung weiterer Terminals T ist wegen begrenzter Reichweite nicht möglich. Im dargestellten Bespiel wird das Basismodul B des zweiten Wagens veranlasst, die Basis für weitere anzumeldende Wagen zu bilden.

Eine ähnliche Ausführungsform, die als Chained-Cells bezeichnet wird zeigt Figur 1d. Auch hier ist eine Verkettung von Funkzellen vorgesehen. Für diese Verkettung wird das Terminal T des dritten Wagens mit dem Basismodul dieses Wagens derart gekoppelt, dass vom Terminal T aus eine Aktivierung bzw. Deaktivierung des Basismoduls B möglich ist. Das aktivierte Basismodul B des dritten Wagens baut eine weitere Funkzelle auf, um auch die Wagen 4 und 5 zu erreichen. Ein Netzaufbau nach Figur 1c oder 1d kann bei entsprechender Realisierung auch Ausfälle einzelner Basismodule B einer Funkzelle kompensieren. Allerdings müssen hierfür die Funkzelle selbst und die Basismodule B der Nachbarzelle mit den entsprechenden Informationen versorgt werden. Erst nach einem Verbindungsausfall kann auf die neue Situation reagiert werden.

Die oben geschilderten Nachteile der bekannten Verbindungsstrukturen gemäß Figur 1a bis 1d werden durch die erfindungsgemäße Ausprägung der Topologie beseitigt.

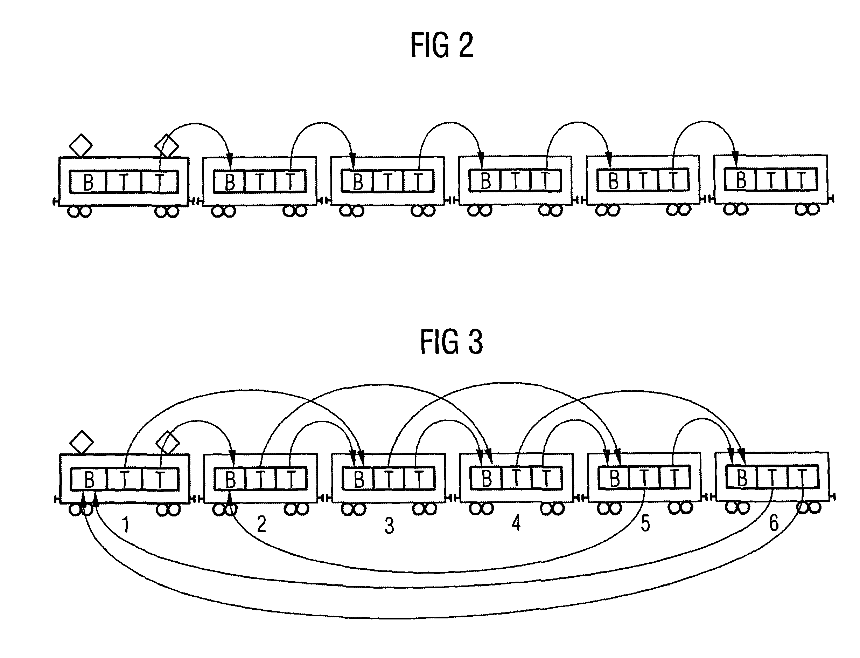

Die Figuren 2 bis 6 veranschaulichen drei Ausführungsformen der erfindungsgemäßen Multiple-Ruled-Chain. Der Ansatz der Multiple-Ruled-Chain stellt eine Erweiterung der bisher vorgestellten Topologien dar. Jeder Wagen enthält drei oder mehr Funkeinrichtungen. Davon werden eine als Basismodul B und die anderen als Terminals T konfiguriert. Auf diese Weise kann ein Netzwerk mit redundanten Verbindungen aufgebaut werden. In Figur 2 wird der erste Schritt des Verbindungsaufbaus vorgestellt. Zunächst wird über den gesamten Zug eine Daisy-Chain-Kette analog zu Figur 1b aufgebaut. Nachdem alle ausgestatteten Wagen in die Kette aufgenommen wurden, erfolgt für den Aufbau redundanter Verbindungen die kreuzweise Verkettung in einem zweiten Schritt. In den Figuren 3/4, 5 und 6 werden drei verschiedene Varianten exemplarisch vorgestellt.

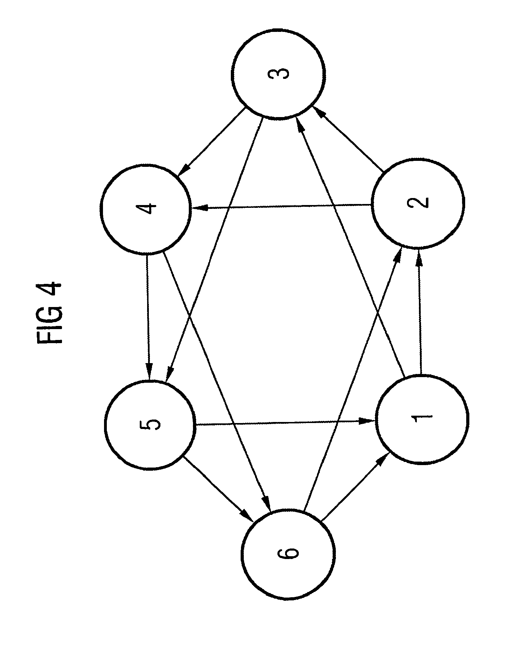

Die Figuren 3 und 4 zeigen einen so genannten Sechsgraf. In den Bespielen sind jeweils sechs Wagen miteinander verkettet. Es ist zu beachten, dass jeder Wagen bzw. Netzknoten bei Vorhandensein von zwei Terminals T lediglich zwei abgehende Verbindungen aufbauen kann. Für die Sechsgraf-Variante ist eine Realisierung solange möglich, wie eine Funkverbindung vom ersten bis zum entferntesten Teilnehmer funktioniert. Eine Erweiterung um zusätzliche Wagen ist daher bei Erreichen der maximalen Reichweite nicht mehr möglich.

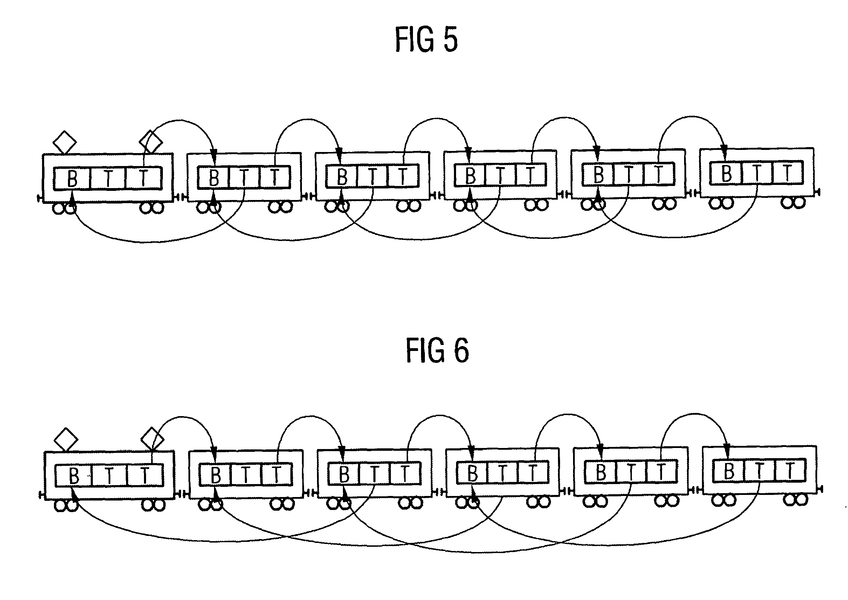

In dieser Hinsicht sind die Ausführungsformen der Figuren 5 und 6 ausbaufähiger. Gemäß Figur 5 wird nach der Daisy-Chain-Verkettung im zweiten Schritt lediglich der nächste Nachbar angeschlossen, so dass jeder Wagen über mindestens zwei Punkt-zu-Punkt-Verbindungen mit seinem Nachbarwagen kommunizieren kann. Die entstandene Struktur weist eine verfügbarkeitserhöhende Redundanz auf und besitzt die für eine Verlängerung dieser Kette notwendige Symmetrie. Der entscheidende Nachteil liegt im eventuellen Ausfall eines Netzknotens. In einem solchen Fall wird die Kette komplett geteilt. Bis zu einer Neukonfiguration ist dann keine Kommunikation über den Zug hinweg möglich.

Ein Verbesserung dieser Situation ergibt sich bei einer Topologie gemäß Figur 6. Nachdem im ersten Schritt der Netzwerkaufbau als einfache Kette im Daisy-Chain-Verfahren über den Zug erfolgt ist, wird von jedem Wagen eine Rückverbindung zum vorletzten Wagen aufgebaut. Falls hier ein Netzknoten, d. h. die Kommunikationseinheit eines Wagen, ausfällt, ist immer noch über den benachbarten Wagen eine alternative Verbindung vorhanden. Gegenmaßnahmen können folglich ergriffen werden, während weiterhin eine Verbindung über den Zug hinweg möglich ist.

Die ungenutzten Terminals T an den Zugenden bei den Varianten der Figuren 5 und 6 stellen zunächst eine ungenutzte Hardware-Ressource dar. Es ist jedoch empfehlenswert, diese zur Überwachung von HF-Kanal-Eigenschaften der verwendeten Kommunikationseinrichtungen zu nutzen. Auf diese Weise kann bei einem Ausfall schnell ein Alternativpfad aufgebaut werden.

Weitere, nicht dargestellte Topologie-Ausführungen können z. B. darin bestehen, größere Sprünge über mehr als einen Wagen hinweg zu realisieren. Daraus ergibt sich eine Verkürzung der Signallaufzeit von Zuganfang bis Zugende.

Denkbar ist auch eine Ausstattung der Wagen mit mehr als drei Funkeinrichtungen. Dadurch ließe sich eine Mehrfachredundanz realisieren.

Die Festlegung auf eine Topologie und die Organisation des Kommunikationssystems kann anhand folgender Randbedingungen erfolgen:
- Datenaufkommen zwischen den Teilnehmern
- maximal annehmbare Übertragungszeit der Daten
- Anforderungen an Sicherheit und Zuverlässigkeit sowie
- Einschränkung der Erreichbarkeit durch zu große räumliche Entfernung.

Ein dynamischer Netzaufbau, beispielsweise auf Grundlage der Empfangsfeldstärke sowie ein dynamisches Routing können zu weiteren Verbesserungen führen.

## Patentansprüche

1. Datenübertragungseinrichtung für einen Wagenverbund mit mehreren Wagen, die jeweils mindestens eine Funkeinrichtung geringer Reichweite aufweisen, wobei die Funkeinrichtung entweder als Basismodul (B) für den Aufbau zeitgleicher Verbindungen zu mehreren Terminals (T) oder als Terminal (T) für den Aufbau einer einzigen Verbindung zu einem Basismodul (B) ausgebildet ist,
**dadurch gekennzeichnet,**
**dass** die Wagen jeweils ein Basismodul (B) und mindestens zwei Terminals (T) aufweisen, wobei Mittel zum Aufbau redundanter Verbindungen derart vorgesehen sind, dass jeweils ein Terminal (T) eines Wagens mit dem Basismodul (B) des nächstfolgenden Wagens und ein weiteres Terminal (T) des Wagens mit dem Basismodul (B) eines weiteren Wagens verbindbar sind, wobei eine dynamische Verbindungssuche nach bestimmten Parametern, insbesondere Verbindungsqualität oder Feldstärke, erfolgt.

2. Datenübertragungseinrichtung nach Anspruch 1,
**dadurch gekennzeichnet,**
**dass** das weitere Terminal (T) des Wagens mit dem Basismodul (B) des übernächsten Wagens verbindbar ist, wobei ein Terminal (T) des vorletzten Wagens und ein Terminal (T) des letzten Wagens mit dem Basismodul (B) des ersten Wagens und ein weiteres Terminal (T) des letzten Wagens mit dem Basismodul (B) des zweiten Wagens verbindbar sind.

3. Datenübertragungseinrichtung nach Anspruch 1,
**dadurch gekennzeichnet,**
**dass** das weitere Terminal (T) des Wagens mit dem Basismodul (B) des vorangehenden Wagens verbindbar ist.

4. Datenübertragungseinrichtung nach Anspruch 1,
**dadurch gekennzeichnet,**
**dass** das weitere Terminal (T) des Wagens mit dem Basismodul (B) des vorvorangehenden Wagens verbindbar ist.

## Claims

1. Data transmitter device for a set of railway wagons with a plurality of wagons which each have at least one short-range radio device, wherein the radio device is embodied either as a base module (B) for setting up simultaneous connections to a plurality of terminals (T) or as a terminal (T) for setting up a single connection to a base module (B), **characterized in that** each have a base module (B) and at least two terminals (T), wherein means are provided for setting up redundant connections in such a way that in each case a terminal (T) of one wagon can be connected to the base module (B) of the following wagon, and another terminal (T) of the wagon can be connected to the base module (B) of another wagon, wherein dynamic connection threading takes place according to specific parameters, in particular connection quality or field strength.

2. Data transmitter device according to Claim 1,
**characterized in that** the other terminal (T) of the wagon can be connected to the base module (B) of the next-but-one wagon, wherein a terminal (T) of the penultimate wagon and a terminal (T) of the last wagon can be connected to the base module (B) of the first wagon, and another terminal (T) of the last wagon can be connected to the base module (B) of the second wagon.

3. Data transmitter device according to Claim 1,
**characterized in that** the other terminal (T) of the wagon can be connected to the base module (B) of the preceding wagon.

4. Data transmitter device according to Claim 1,
**characterized in that** the other terminal (T) of the wagon can be connected to the base module (B) of the wagon before the preceding wagon.

## Revendications

1. Dispositif de transmission des données pour une rame comportant plusieurs voitures, qui comportent chacune au moins un dispositif de liaison radio de petit rayon d'action, le dispositif de liaison radio étant réalisé soit sous forme de module de base ( B ) pour établir des liaisons simultanées vers plusieurs terminaux ( T ), soit sous forme de terminal ( T ) pour établir une liaison unique vers un module de base ( B ),
**caractérisé en ce que** chacune des voitures comporte un module de base ( B ) et au moins deux terminaux ( T ), des moyens destinés à établir des liaisons redondantes étant prévus de telle sorte que respectivement un terminal ( T ) d'une voiture peut être relié au module de base ( B ) de la voiture suivante, et un terminal ( T ) supplémentaire de la voiture peut être relié au module de base ( B ) d'une autre voiture, une recherche dynamique de liaison étant effectuée selon des paramètres déterminés, en particulier selon la qualité de la liaison ou l'intensité de champ.

2. Dispositif de transmission des données selon la revendication 1, **caractérisé en ce que** le terminal ( T ) supplémentaire de la voiture peut être relié au module de base ( B ) de la voiture après la suivante, un terminal ( T ) de l'avant-dernière voiture et un terminal ( T ) de la dernière voiture pouvant être reliés au module de base ( B ) de la première voiture et un terminal ( T ) supplémentaire de la dernière voiture pouvant être reliée au module de base ( B ) de la deuxième voiture.

3. Dispositif de transmission des données selon la revendication 1, **caractérisé en ce que** le terminal ( T ) supplémentaire de la voiture peut être relié au module de base ( B ) de la voiture précédente.

4. Dispositif de transmission des données selon la revendication 1, **caractérisé en ce que** le terminal ( T ) supplémentaire de la voiture peut être relié au module de base ( B ) de la voiture précédent la voiture précédente.
